Europäisches Patentamt

European Patent Office

Office européen des brevets

(19)

(11) EP 0 656 388 B1

(12) **FASCICULE DE BREVET EUROPEEN**

(45) Date de publication et mention
de la délivrance du brevet:
**11.04.2001 Bulletin 2001/15**

(51) Int Cl.⁷: **C08J 5/12**, B29C 45/16,
B32B 25/08, C08L 77/12,
C08L 67/02, C08L 15/00

(21) Numéro de dépôt: **94402406.6**

(22) Date de dépôt: **26.10.1994**

(54) **Alliages de thermoplastique et caoutchouc adhérents sur des thermoplastiques**

An Thermoplasten haftende Thermoplast-Kautschukpolymerlegierungen

Thermoplastic rubber polymer alloys adherent to thermoplastics

(84) Etats contractants désignés:
**BE CH DE FR GB IT LI NL**

(30) Priorité: **26.11.1993 FR 9314154**

(43) Date de publication de la demande:
**07.06.1995 Bulletin 1995/23**

(73) Titulaire: **Atofina**
**92800 Puteaux (FR)**

(72) Inventeurs:
• **Hert, Marius**
**F-27470 Serquigny (FR)**
• **Alex, Patrick**
**F-91470 Limours Pecquese (FR)**
• **Cerf, Martine**
**F-27300 Bernay (FR)**

• **Dousson, Christian**
**F-27300 Bernay (FR)**

(74) Mandataire: **Neel, Henry**
**Atofina**
**D.C.R.D./D.P.I.**
**4, Cours Michelet,**
**La Défense 10**
**92091 Paris La Défense Cedex (FR)**

(56) Documents cités:
**EP-A- 0 321 830**     **US-A- 5 149 589**

• **PATENT ABSTRACTS OF JAPAN vol. 12, no. 312**
**(C-523) (3159) 24 Août 1988 & JP-A-63 081 158**
**(JAPAN SYNTHETIC RUBBER CO LTD) 12 Avril**
**1988**

**Description**

L'invention concerne des articles composites comprenant des matériaux thermoplastiques adhérents en eux-mêmes à une famille particulière d'élastomères thermoplastiques qu'on peut obtenir par un procédé de vulcanisation en dynamique de caoutchoucs dispersés sous forme de fines particules dans une matrice thermoplastique (appelés TPV par la suite) ; c'est-à-dire que les articles de l'invention comprennent un thermoplastique et un TPV, ces TPV étant aussi appelés alliages caoutchouc/thermoplastiques.

La mise au point de pièces techniques, remplissant plusieurs fonctions, nécessite de plus en plus l'assemblage de matériaux couvrant le spectre le plus étendu possible de propriétés mécaniques et physico-chimiques. La présente invention se rapporte à des composites assemblés sans recours à des adhésifs en utilisant des procédés de mise en oeuvre bien connus tels que le surmoulage, l'injection bi-matière, la coextrusion.

La demande européenne EP 550346 décrit un procédé d'obtention et des articles constitués de caoutchoucs vulcanisés et de copolymères à blocs polyamides associés sans adhésifs. On arrive ainsi à combiner dans un même objet, les propriétés spécifiques des caoutchoucs (faible déformation rémanente à la compression, basse dureté, résistance à l'abrasion, aux huiles à chaud...) et les propriétés spécifiques des polyéther-ester-amides (souplesse, bonnes propriétés mécaniques, résistance à la fatigue...).

Cependant, les procédés mis en oeuvre pour réaliser ces objets sont pour partie ceux de l'industrie du caoutchouc, caractérisés par des temps de cycle long (typiquement 10 minutes) et des coûts élevés de mise en oeuvre.

L'objet de la présente invention est d'arriver à des articles composites, ayant les mêmes fonctions multiples, en remplaçant la partie constituée de caoutchouc vulcanisé par un caoutchouc thermoplastique, TPV, et en ayant recours à des procédés de mise en oeuvre thermoplastique. Il est bien connu que les TPV sont des matériaux ayant des propriétés très proches des caoutchoucs vulcanisés tout en conservant la facilité de mise en oeuvre des thermoplastiques (voir l'article de synthèse décrivant ces matériaux de A. Coran et al. dans "Thermoplastic Elastomers", Mac Millan Publishing 1987).

Le brevet EP 231674 décrit des alliages constitués de copolymères à bloc polyamide et des caoutchoucs nitriles non fonctionnalisés.

La demande japonaise JP 63-81158 décrit des compositions à base de polyétheresteramides et de divers caoutchoucs au moins partiellement réticulés, les deux composants étant dans un rapport de 1:1.

Mais dans la présente invention l'avantage de la vulcanisation du caoutchouc réside dans la possibilité de créer une matrice de thermoplastique même si le composant majoritaire est le caoutchouc. L'intérêt est aussi d'avoir un TPV formé d'une matrice du thermoplastique dans laquelle est dispersé le caoutchouc vulcanisé. Ceci est valable même si le thermoplastique est minoritaire et le caoutchouc majoritaire.

Dans les exemples fournis par le demandeur japonais, il n'y a que la vulcanisation partielle du caoutchouc, tandis qu'une vulcanisation poussée (de 50 à 90 %) permet d'obtenir des propriétés améliorées telle que la résistance à la rupture, à l'abrasion, meilleure ténacité et déformation rémanente à la compression.

Les TPV utilisés pour réaliser les articles composites de l'invention comprennent :

- au moins un élastomère fonctionnalisé et vulcanisable ;
- au moins un copolymère sequencé à blocs polyéther ou polyester amorphe.

On a trouvé que ces compositions de TPV peuvent être associés à divers thermoplastiques par des procédés tels que la coinjection, le surmoulage, la coextrusion, c'est-à-dire essentiellement sans adhésif.

Ainsi la présente invention est un composite comprenant un alliage caoutchouc thermoplastique (TPV) adhérent en lui-même sur un matériau thermoplastique, le TPV comprenant (i) au moins un élastomère fonctionnalisé par des radicaux acide carboxylique, anhydrides, sels ou esters desdits acides carboxyliques, par des groupes epoxy, amino ou par des halogenes et vulcanisé et (ii) au moins un copolymère séquencé à blocs polyéther ou polyester amorphe.

La cohésion à l'interface entre ces deux matériaux est en général supérieure à la résistance à la rupture de chacun des 2 matériaux. Toutefois, on ne sortirait pas du cadre de l'invention en ajoutant un adhésif sur tout ou partie de la surface de contact.

La quantité d'élastomère vulcanisable peut être de 20 à 90 % en poids du TPV, c'est-à-dire de l'ensemble élastomère vulcanisable copolymère séquencé.

S'agissant du copolymère séquencé formant le TPV, ses blocs polyéther ou polyester amorphe en constituent la partie souple et des blocs semi cristallins polyamides, polyesters ou polyuréthannes peuvent en constituer la partie rigide.

A titre d'exemple, on peut citer les polyétheruréthannes formés par la réaction de polyestersdiols amorphes avec des polyisocyanates et les polyétheruréthannes formés par la réaction de polyétherdiols avec des polyisocyanates.

Le copolymère séquencé peut comprendre des motifs polyéthers et des motifs polyesters. Ce sont par exemple des blocs polyéthers et des blocs polyesters. Ces produits sont connus sous le nom de polyesters élastomères et sont thermoplastiques.

Les polyéthers sont par exemple du polyéthylène glycol (PEG), du polypropylène glycol (PPG) ou du polytétraméthylène glycol (PTMG).

La masse molaire $\overline{M}n$ de ces polyéthers peut être comprise entre 250 et 6000.

Ces polyéthers se condensent avec au moins un diacide carboxylique pour former les segments souples des polyesters élastomères.

Les blocs polyesters résultent par exemple de la condensation d'au moins un diol avec au moins un diacide carboxylique. Le diol peut être le glycol, le propanediol ou le butanediol. Le diacide peut être l'acide téréphtallique. Ces blocs forment les segments rigides du polyester élastomère.

Les segments rigides peuvent comprendre plusieurs motifs résultant de l'action du polyéther sur un diacide. Les segments rigides et les segments souples sont attachés par des liaisons ester. De tels polyesters élastomères sont décrits dans les brevets EP 402 883 et EP 405 227.

Quant aux copolymères séquencés qui comprennent des motifs polyéthers et des motifs amides, ils peuvent être répartis de façon statistique ou ordonnée. Les motifs amides peuvent être isolés ou groupés dans des oligomères provenant de la réaction d'une diamine avec un diacide ou de la condensation d'un alpha oméga amino acide carboxylique.

Les élastomères les plus utilisés sont ceux comprenant des blocs polyamides et des blocs polyéthers. Les blocs polyamides peuvent provenir soit de la condensation d'un lactame ou d'un alpha oméga amino acide, soit de la réaction d'un diacide et d'une diamine.

Ces blocs polyamides peuvent être préparés en présence d'un diacide. On obtient des blocs polyamides à extrémités acide carboxylique. La masse molaire $\overline{M}n$ des blocs polyamides peut être entre 600 et 5000.

Les polyéthers sont par exemple du polyéthylène glycol, du polypropylène glycol ou du polytétraméthylène glycol de masse molaire $\overline{M}n$ entre 250 et 6000, plusieurs polyéthers peuvent être enchaînés par exemple par des diacides dans le cas des polyétherdiols. La condensation de ces blocs polyamides et de ces blocs polyétherdiols produit des polyétheresteramides.

On ne sortirait pas du cadre de l'invention en utilisant d'autres élastomères à blocs polyamides et à blocs polyéthers. Ces produits peuvent être préparés par réaction de lactame ou alpha oméga amino acide de diacide et de polyétherdiol ou polyétherdiamine. On peut aussi condenser des blocs polyamides à extrémités aminées avec des polyéthers diacides, condenser des blocs polyamides à extrémités acides avec des polyétherdiamines (ces derniers sont appelés polyétheramides).

Tous ces produits sont décrits dans les brevets US 4,331,786 - 4,115,475-'4,195,015 - 4,839,441 et 4,864,014.

L'élastomère contenu dans le TPV est réticulé, lors du mélangeage, par un système de vulcanisation sélectionné parmi les peroxydes, le soufre et ses accélérateurs, les molécules donneurs de soufre.

Les élastomères synthétiques ou naturels vulcanisables convenant pour la réalisation des alliages TPV de la présente invention sont bien connus de l'homme du métier, le terme élastomère dans la définition de la présente invention signifiant que celui-ci peut être constitué de mélanges de plusieurs élastomères.

Ces élastomères ou mélanges d'élastomères présentent une déformation rémanente à la compression (DRC) à 100°C inférieure à 50 % généralement entre 5 et 40 % et de préférence inférieure à 30 %, après vulcanisation.

L'invention concerne aussi un procédé de fabrication du composite caractérisé en ce qu'on fabrique le TPV par mélange :

- de l'élastomère fonctionnalisé vulcanisable cité plus haut ayant été auparavant formulé avec un agent de vulcanisation et éventuellement des charges et des plastifiants,
- du copolymère séquencé,

à une température suffisante pour provoquer la fusion du copolymère séquencé et la vulcanisation mais avec un temps de grillage suffisamment long pour éviter de consommer toutes les fonctions de l'élastomère avant d'avoir dispersé intimement l'élastomère dans le copolymère séquencé fondu, puis en ce que le TPV et le matériau thermoplastique sont associés par coinjection, surmoulage ou coextrusion.

A titre d'exemple d'élastomère, on peut citer le caoutchouc naturel, le polyisoprène, une émulsion polymérisée à base de copolymère styrène/butadiène, une solution polymérisée à base de copolymère styrène/butadiène, un polybutadiène ayant un taux élevé de double liaison en position cis obtenu par catalyse au nickel, cobalt, titane ou néodynium, un terpolymère éthylène halogéné/propylène/diène, un caoutchouc butyle halogéné, un copolymère séquencé styrène/butadiène, un copolymère séquencé styrène/isoprène, les produits halogénés des polymères ci-dessus, un copolymère acrylonitrile/butadiène, un copolymère acrylonitrile/butadiène hydrogéné, un élastomère acrylique, un élastomère fluoré, le chloroprène, les caoutchoucs épichlorhydrine.

Les élastomères ci-dessus qui ne sont pas fonctionnalisés peuvent l'être par exemple par greffage de radicaux de façon connue ou par mélange avec des élastomères déjà fonctionnalisés tels que des élastomères acryliques ou des NBR carboxylés (X-NBR).

Parmi les élastomères mentionnés ci-dessus, on choisira avantageusement ceux compris dans le groupe suivant : les élastomères nitriles carboxylés, les élastomères acryliques, les polybutadiènes carboxylés, les terpolymères éthylène/propylène/diène greffés ou les mélanges de ces polymères avec les mêmes élastomères mais non greffés comme les caoutchoucs nitriles, les polybutadiènes, les terpolymères éthylène/propylène/diène, seuls ou en mélange.

Les élastomères mentionnés ci-dessus peuvent être aussi mélangés avec du caoutchouc dépourvu de fonctions, l'élastomère fonctionnalisé assurant la compatibilité entre ce dernier et le copolymère séquencé.

On peut ajouter aussi du caoutchouc déjà vulcanisé (recyclage du matériau broyé).

De préférence, les élastomères vulcanisables précités comportent un taux en poids de fonctions compris entre 0,3 et 10 % par rapport auxdits élastomères.

Les systèmes de vulcanisation utilisés pour réaliser ces TPV sont bien connus de l'homme du métier et en conséquence, l'invention n'est pas limitée à un type particulier de systèmes. Il suffit que celui-ci réponde au critère concernant la cinétique de vulcanisation définie dans la définition de l'invention indiquée précédemment.

Lorsque l'élastomère est à base de monomère insaturé (butadiène, isoprène, vinylidène-norbornène...) on peut citer quatre types de systèmes de vulcanisation :

- Systèmes au soufre constitués de soufre associé aux accélérateurs usuels tels que les sels métalliques de dithiocarbamates (diméthyl dithiocarbamate de zinc, de tellure, etc...), les disulfures de thiurame (tétraméthyl disulfure de thiurame, etc...), les sulféramides, etc...

Ces systèmes peuvent contenir également de l'oxyde de zinc associé à de l'acide stéarique.

- Systèmes donneurs de soufre dans lesquels la majorité du soufre utilisée pour les pontages, provient de molécules soufrées telles que les composés organo-soufrés cités plus haut.
- Systèmes aux résines phénoliques constitués de résines formophénoliques difonctionnelles pouvant être halogénées associées à des accélérateurs tels que le chlorure stanneux, l'oxyde de zinc.
- Systèmes aux peroxydes. Ils permettent d'avoir un produit plus stable à la chaleur, blanc, pas jaune, comme dans le cas des systèmes donneurs de soufre.

Tous les donneurs de radicaux libres peuvent être utilisés (peroxydes de dicumyle, etc...) en association avec l'oxyde de zinc et l'acide stéarique.

Lorsque l'élastomère est acrylique (polyacrylate de butyle avec fonctions acides ou époxy ou toute autre fonction réactive permettant la réticulation) on utilise les réticulants habituels à base de diamines (orthotoluidyl guanidine, diphénylguanidine, etc...) ou de diamines bloquées (carbamate d'hexaméthylène diamine etc...).

Les compositions élastomériques peuvent être modifiées pour certaines propriétés particulières (amélioration des propriétés mécaniques par exemple) par l'addition de charges telles que le noir de carbone, la silice, le kaolin, l'argile, le talc, la craie, etc... Le kaolin calciné peut être préférable à la silice pour éviter l'hydrolyse partielle du thermoplastique à l'état fondu lors du mélangeage avec le caoutchouc. Ces charges peuvent être traitées en surface par des silanes, des polyéthylène glycols ou toute autre molécule de couplage. En général, le taux de charges en parties en poids est compris entre 5 et 100 pour 100 parties d'élastomères.

En outre, les compositions peuvent être assouplies par des plastifiants tels que les huiles minérales dérivées du pétrole, les esters de l'acide phtalique ou de l'acide sébacique, les plastifiants polymères liquides tels que le polybutadiène de faible masse éventuellement carboxylé, et d'autres plastifiants bien connus de l'homme du métier.

Les combinaisons d'agent de vulcanisation utilisées pour mettre en oeuvre le procédé sont telles qu'elles doivent permettre une réticulation complète de l'élastomère selon une cinétique conduisant à de bonnes propriétés de résistances à la séparation, telles que mentionnées dans la définition de l'invention et en général, à de bonnes propriétés caoutchoutiques (mesurées par une déformation rémanente à la compression à 100°C, des propriétés dynamométriques en traction, etc...).

Avantageusement, la cinétique mesurée à l'aide d'un rhéomètre oscillant sera telle que le temps caractéristique de vulcanisation à 90 %, $t_{90}$, ne dépasse pas 15 minutes à 160°C et avantageusement sera compris entre 5 et 10 minutes.

Dans le cas d'un élastomère insaturé carboxylé, la vulcanisation de la phase caoutchouc dispersée dans la matrice thermoplastique ayant lieu grâce aux doubles liaisons et aux groupes carboxyliques, il faut éviter que ces derniers, plus réactifs, soient tous consommés pour la réticulation, alors qu'ils sont nécessaires à la compatibilisation avec le thermoplastique. C'est pour cela qu'il faut bien contrôler la température de vulcanisation pour avoir un temps de grillage suffisamment long, et laisser ainsi le temps aux groupes carboxyliques encore libres, de réagir avec le thermoplastique en phase fondue.

Les TPV décrits précédemment peuvent être associés à des matériaux thermoplastiques choisis, par exemple, parmi les polyamides, les élastomères thermoplastiques à blocs polyamide, les élastomères thermoplastiques à blocs polyesters, les polyesters semi-cristallins, les polyuréthannes (TPU), les PVC rigides ou plastifiés. On utilise des procédés connus de l'homme de l'art, tels que le surmoulage, la co-injection, la coextrusion, la lamination, etc....

Parmi les exemples typiques d'associations, nous pouvons citer :

***Les articles chaussants*** par surmoulage ou co-injection

Semelles en polyétheresteramide, choisi en raison de sa grande résistance à la fatigue, sa faible hystérésis en déformation et ses bonnes propriétés à froid sur lesquelles on surmoule par injection un alliage TPV pour créer une couche d'usure ou des crampons résistants à l'abrasion, antidérapants, résistants aux huiles et aux graisses.

***Les profilés coextrudés***

Certains de ces TPV peuvent être associés à du PVC plastifié pour former la partie du profilé soumis à compression, nécessitant une bonne résistance au fluage à chaud, une grande souplesse, applications telles que joints dans le bâtiment et l'automobile.

***Tubes coextrudés***

Ces TPV sont extrudables en tubes souples ayant une bonne résistance aux huiles à chaud. Par coextrusion, ils peuvent recouvrir un tube ayant une couche extérieure qui est l'un des matériaux thermoplastique cité ci-dessus, par exemple le polyamide.

***Bandes transporteuses***

Parmi les différentes structures multicouches de l'art antérieur, il en existe où les couches extérieures sont constituées de caoutchouc collé à la surface de co-polyétheresteramides, TPV ou copolyéthers à blocs polyesters ou TPU. Ces couches de caoutchouc collées peuvent être avantageusement remplacées par ces TPV coextrudés avec un ou plusieurs des matériaux thermoplastiques cités ci-dessus.

Le TPV apporte la résistance à l'abrasion, le haut coefficient de frottement, l'élasticité, la basse dureté tandis que le thermoplastique apporte la résistance au pliage, à la fatigue et la ténacité.

***Courroies de transmission***

Certaines courroies nécessitent des matériaux très souples pour envelopper parfaitement des poulies de faible diamètre tournant à grande vitesse. La face en contact avec la poulie doit posséder une bonne élasticité caoutchoutique, un coefficient de frottement élevé.

## EXEMPLES

Les exemples 1, 2, 3 et 4 concernent la réalisation et la caractérisation des TPV utilisés dans les exemples 5-7 pour concevoir des articles composites.

## EXEMPLE 1

***a)*** Un élastomère nitrile carboxylé (XNBR) de marque CHEMIGUM (R.M. de Goodyear) a été formulé sur mélangeur interne, à des températures n'excédant pas 120°, de la façon suivante (parties en poids) :

| | | |
|---|---|---|
| Butadiène acrylonitrile carboxylé | XNBR RCG 7343 | 110 |
| | SILICE KS 300 | 20 |
| Phtalate de diisononyle | DINP | 5 |
| Polyéthylène glycol | PEG 4000 | 2 |

(suite)

| | | |
|---|---|---|
| | TiO$_2$ | 5 |
| Vinyl silane (triméthoxy) | SI 69 | 1 |
| Antioxydant | WINGSTAY 29 | 1 |
| Activateur | POLYVEST C70 | 4 |
| | SOUFFRE | 1.8 |
| | ZnO | 5 |
| | ACIDE STEARIQUE | 1 |
| Disulfure de benzothiazyle | MBTS | 1.5 |
| Disulfure de tétraméthylthiurame | TMTD | 0.5 |

Cette composition élastomère a été ensuite mélangée sur un mélangeur interne avec un polyétheresteramide de marque PEBAX 4033 de dureté shore D 40 constitué de blocs de polytétraméthylène glycol et de blocs de PA 12 à la composition suivante :

| | |
|---|---|
| Elastomère | 60 % |
| PEBAX 4033 | 40 % |

La température en fin de mélange était de 220°C.

Ce TPV a été granulé sur extrudeuse puis injecté sur presse thermoplastique dans divers moules éprouvettes. Les tests de propriétés mesurées selon les normes indiquées sont donnés dans le tableau 1.

*b)* Avec le produit CHEMIGUM NX 775 (R.M. de Goodyear à 7 % de groupes carboxyliques) préalablement broyé, on a obtenu des résultats similaires.

## EXEMPLE 2

La composition élastomère de l'exemple 1 a été mélangée, sur mélangeur interne, avec un polyéther à blocs polyester de marque HYTREL 4056 (blocs PBT et blocs PTMG téréphtalate) à la composition :

| | |
|---|---|
| Elastomère | 60 % |
| HYTREL | 40 % |

La température en fin de mélange était de 210°C.

Les propriétés de cet alliage sont données au tableau 1.

## EXEMPLE 3

La composition élastomère de l'exemple 1 a été mélangée, sur un mélangeur interne, avec un polyuréthanne à blocs polyester de marque DESMOPAN 590 à la composition :

| | |
|---|---|
| Elastomère | 60 % |
| DESMOPAN | 40% |

La température en fin de mélange était de 230°C.

Les propriétés de cet alliage sont données au tableau 1.

## EXEMPLE 4

Un mélange d'élastomères, charges, plastifiants, système de vulcanisation a été réalisé sur mélangeur interne, à des températures n'excédant pas 120°C. La composition de ce mélange est la suivante :

| | | |
|---|---|---|
| Elastomère butadiène-nitrile Chemigum | P90 | 70 |
| Elastomère butadiène-nitrile carboxylé | CHEMIGUM RCG 7343 | 30 |
| silice | KS 300 | 10 |

(suite)

| phtalate de isononyle | DINP | 20 |
|---|---|---|
| oxyde de Zn | ZnO | 5 |
| oxyde de titane | TiO$_2$ | 5 |
| silane | SI 69 | 2 |
| cire | PEG 4000 | 2 |
| | acide stéarique | 0.5 |
| | peroxyde trigonox B | 2 |
| | acrylate de zinc | 2 |

Cette composition élastomère a été mélangée, sur un mélangeur interne, avec un polyétheresteramide de marque PEBAX 5533 constitué de blocs PA 12 et PTMG et de dureté shore D = 55 à la composition suivante :

| Elastomère | 70% |
|---|---|
| PEBAX 5533 | 30 % |

La température en fin de mélange était de 210°C.
Les propriétés de cet alliage sont données au tableau 1.

**EXEMPLE 5**

Une presse à injecter les thermoplastiques de marque KRAUS MAFFEI et de force de fermeture de 110T (1100kN) est équipée d'un moule de dimensions 100 x 100 x 5mm.
Différentes plaques de polyétheresteramide et de PA 12, dimensions 100 x 100 x 2 mm, ont été réalisées au préalable par injection. Ces plaques sont positionnées dans le moule d'épaisseur 5 mm, comme insert. Le surmoulage a été réalisé avec le caoutchouc thermoplastique TPV de l'exemple 1 sur différentes séries de plaques référencées :

| 5.1 | Plaques de polyétheresteramide de marque Pebax 4033 |
|---|---|
| 5.2 | Plaques de polyétheresteramide de marque Pebax 5533 |
| 5.3 | Plaques de polyétheresteramide de marque Pebax 6333 |
| | idem au Pebax 4033 sauf à la dureté shore D = 63 |
| 5.4 | Plaques de polyamide 12 de marque Rilsan AESNO |

La température matière à l'injection est de 260°C et la température du moule de 40°C. Pour l'exemple 5.4, la température d'injection est de 290°C.
La force de pelage entre les deux matériaux, mesurée à une vitesse de 50 mm/mn. est donnée dans le tableau suivant :

| **EXEMPLE** | **5.1** | **5.2** | **5.3** | **5.4** |
|---|---|---|---|---|
| Force de pelage daN/cm | 5,6 | 7,5 | 7,6 | 7,0 |

Dans tous les cas la rupture était de nature cohésive dans le caoutchouc thermoplastique.

**EXEMPLE 6**

Des plaques de polyéther à blocs polyesters de marque HYTREL 4056 ont été surmoulées avec le TPV de l'exemple 2 dans les conditions décrites dans l'exemple 5.
La force de pelage entre les deux matériaux est de 6,2 daN/cm.

**EXEMPLE 7**

Des plaques de polyuréthanne de marque DESMOPAN 590 ont été surmoulées avec le TPV de l'exemple 3 dans les conditions décrites dans l'exemple 5. La force de pelage entre les deux matériaux est de 5,2 daN/cm et la rupture est cohésive dans le TPV.

TABLEAU 1

| EXEMPLES | | | 1 | 2 | 3 | 4 |
|---|---|---|---|---|---|---|
| Propriétés | Méthode | Unités | | | | |
| Dureté | ASTM D2240 | Shore A | 82 | 79 | 77 | 85 |
| | | Shore D | 27 | 25 | 25 | 30 |
| R. Rupture | ASTM D412 | Mpa | 14.9 | 14.5 | 13.1 | - |
| All.* Rupture | " | % | 377 | 520 | 320 | - |
| Module 100 % | " | Mpa | 6.2 | 4.5 | 5.4 | - |
| 200 % | " | | 8.8 | 6.5 | 8.6 | - |
| 300 % | " | | 11.5 | 8.7 | 12.7 | - |
| Déchirement non entaillé | ASTM D624 | Kn/m | 54 | 56.8 | 39.1 | - |
| DRC** 22h à 100°C | ASTM D395 | % | 59 | 56 | 46.5 | 48 |
| Abrasion | DIN 53516 | mg/mm3 | 93.4 | | | 100 |
| Gonflement huile ASTM n°3 | ASTM D471 | % Vol. | 16 | - | - | 2.6 |

* Allongement à la rupture

**DRC : Déformation rémanente à la compression

- : non mesuré

**Revendications**

1.  Composite comprenant un alliage caoutchouc thermoplastique (TPV) adhérant en lui-même sur un matériau thermoplastique, le TPV comprenant (i) au moins un élastomère fonctionnalisé par des radicaux acides carboxyliques, anhydrides, sels ou esters desdits acides carboxyliques, par des groupes epoxy, amino ou par des halogènes et vulcanisé et (ii) au moins un copolymère séquencé à blocs polyéther ou polyester amorphe.

2.  Composite selon la revendication 1 caractérisé en ce que le copolymère séquencé du TPV comprend des blocs polyéther ou polyester amorphe qui en constituent la partie souple et des blocs polyamides, polyester, ou polyuréthanne qui en constituent la partie rigide.

3.  Procédé de fabrication du composite selon la revendication 1 ou 2 caractérisé en ce que l'on fabrique le TPV par mélange :

    -   de l'élastomère vulcanisable fonctionnalisé par des radicaux acides carboxyliques, anhydrides, sels ou esters desdits acides carboxyliques, par des groupes epoxy, amino ou par des halogènes et ayant été auparavant formulé avec un agent de vulcanisation et éventuellement des charges et des plastifiants,

    -   du copolymère séquencé,

    à une température suffisante pour provoquer la fusion du copolymère séquencé et la vulcanisation mais avec un temps de grillage suffisamment long pour éviter de consommer toutes les fonctions de l'élastomère avant d'avoir dispersé intimement l'élastomère dans le copolymère séquencé fondu,
    puis en ce que le TPV et le matériau thermoplastique sont associés par coinjection, surmoulage ou coextrusion.

4.  Semelles de chaussures comprenant le composite des revendications 1 ou 2.

5.  Profilés coextrudés comprenant le composite des revendications 1 ou 2.

6.  Tubes coextrudés comprenant l'alliage caoutchouc/thermoplastique TPV surmoulé autour d'un tube ayant une couche extérieure en polyamide.

7.  Bandes transporteuses comprenant le composite des revendications 1 ou 2.

8.  Courroies de transmission comprenant le composite des revendications 1 ou 2.

## Claims

1. Composite comprising a thermoplastic rubber alloy (TPV) adhering by itself to a thermoplastic, the TPV comprising (i) at least one elastomer which is functionalized by carboxylic acid radicals, anhydrides, or salts or esters of the said carboxylic acids, by epoxy or amino groups, or by halogens, and is vulcanized and (ii) at least one block copolymer with polyether or amorphous polyester blocks.

2. Composite according to Claim 1, characterized in that the block copolymer of the TPV comprises polyether or amorphous polyester blocks which constitute the soft part thereof and polyamide, polyester or polyurethane blocks which constitute the hard part thereof.

3. Process for fabricating the composite according to Claim 1 or 2, characterized in that the TPV is manufactured by blending:

   - a vulcanizable elastomer functionalized by carboxylic acid radicals, anhydrides, or salts or esters of the said carboxylic acids, by epoxy or amino groups, or by halogens, and having been formulated beforehand with a vulcanizing agent and, optionally, fillers and plasticizers,
   - a block copolymer,

   at a temperature high enough to cause melting of the block copolymer and vulcanization, but with a scorch time long enough to prevent all the functional groups
   of the elastomer being consumed before having dispersed the elastomer intimately in the block copolymer melt, and in that the TPV and the thermoplastic are combined by coinjection moulding, overmoulding or coextrusion.

4. Shoe soles comprising the composite of either of Claims 1 and 2.

5. Coextruded profiles comprising the composite of either of Claims 1 and 2.

6. Coextruded tubes comprising the rubber/thermoplastic alloy TPV overmoulded around a tube having an outer layer made of polyamide.

7. Conveyor belts comprising the composite of either of Claims 1 and 2.

8. Transmission belts comprising the composite of either of Claims 1 and 2.

## Patentansprüche

1. Verbundmaterial bestehend aus einer thermoplastischen Kautschukmischung (TPV), die von sich heraus an einem thermoplastischen Material haftet, wobei das TPV (i) aus mindestens einem durch Radikale von Karbonsäuren, Anhydriden, Salzen oder Estern dieser Säuren, durch Epoxid- bzw. Aminogruppen oder durch Halogene funktionalisiertem und vulkanisiertem Elastomer sowie (ii) aus mindestens einem, durch Polyätherbausteine oder amorphe Polyester sequenzierten Kopolymer besteht.

2. Verbundmaterial entsprechend der Anspruch 1, das dadurch gekennzeichnet ist, daß das sequenzierte Kopolymer des TPV PolyätherBausteine oder amorphe Polyester enthält, die seinen flexiblen Teil bilden, sowie aus Polyamid-, Polyester- oder Polyurethan-Bausteinen, die seinen unelastischen Teil bilden.

3. Verfahren zur Herstellung des Verbundmaterials entsprechend der Ansprüche 1 oder 2, das dadurch gekennzeichnet ist, daß das TPV hergestellt wird, indem :

   - das vulkanisierbare und durch Radikale von Karbonsäuren, Anhydriden, Salzen oder Estern dieser Karbonäuren, durch Epoxid- bzw. Aminogruppen oder durch Halogene funktionalisierte Elastomer, dem vorher ein Mittel für die Vulkanisation und gegebenenfalls Füllstoffe und Weichmacher zugegeben wurden,

   - und das sequenzierte Kopolymer

   bei einer Temperatur miteinander vermischt werden, die ausreichend ist, um das Schmelzen des sequenzierten Kopolymers und die Vulkanisation herbeizuführen, wobei jedoch die Zeit der Vernetzung ausreichend lang ist um zu vermeiden, daß alle Funktionen des Elastomers verbraucht werden, bevor das Elastomer in dem geschmolzenen sequenzierten Kopolymer intensiv dispergiert worden ist.

sowie daß das TPV und das thermoplastische Material miteinander durch Mehrkomponentenspritzguß, Formguß oder Koextrusion verbunden werden.

4. Schuhsohlen, die den Verbundwerkstoff entsprechend der Ansprüche 1 oder 2 enthalten.

5. In Koextrusion hergestellte Profile, die den Verbundwerkstoff entsprechend der Ansprüche 1 oder 2 enthalten.

6. In Koextrusion hergestellte Rohre, die die Mischung Kautschuk / Thermoplast / TPV enthalten, die im Formguß auf ein Rohr aufgebracht wurde, das eine äußere Schicht aus Polyamid besitzt.

7. Transportbänder, die den Verbundwerkstoff entsprechend der Ansprüche 1 oder 2 enthalten.

8. Antriebsriemen, die den Verbundwerkstoff entsprechend der Ansprüche 1 oder 2 enthalten.